# EUROPEAN PATENT APPLICATION

(11) **EP 2 365 683 A1**
(43) Date of publication of application: **14.09.2011**
(21) Application number: 11290112.9
(22) Date of filing: 04.03.2011
(51) Int. Cl.: H04M 1/03, B29C 43/36

(54) **Method to adapt a phone handset to several wideband earpieces**

(30) Priority: 04.03.2010 CN 10129006
(71) Applicant: Alcatel Lucent, 75007 Paris (FR)
(72) Inventor: Angot, Frederic, 67150 Gerstheim (FR); Chanjuan, Feng, Shanghai, 201206 (CN)
(74) Representative: Michalski Hüttermann & Partner Patentanwälte

(57) **Abstract**

The invention relates to a method to adapt a phone handset to several types of wideband earpieces, the method at least comprises the steps of:
designing a plurality of toolings for the manufactures of several types of phone handsets according to the acoustic characteristics of several types of wideband earpieces;
testing the plurality of toolings respectively;
determining the toolings which correspond to said several types of wideband earpieces one by one;
giving one wideband earpiece and confirming the type of the wideband earpiece;
selecting a certain tooling from the plurality of toolings according to said type of the wideband earpiece;
manufacturing a phone handset by using the selected tooling; and
mounting said wideband earpiece onto the phone handset.

## Description

### BACKGROUND OF THE INVENTION

### Field of the Invention

The present invention relates to a field of telecommunication, and in particular, to a manufacturing and testing method to adapt a phone handset to several wideband earpieces.

### Description of the Related Art

Telecommunication networks already offer the ability to have an audio communication in a larger frequency band other than the classical 300-3400Hz frequency range.

By using appropriate codecs it is possible to transmit and receive audio wideband signal to improve drastically the quality of the communication.

Even if many phones integrate the technology to enable wideband communication, a very few number of phones are able to recover acoustically the whole richness of the wideband electrical signal.

The technical problem solved is to avoid changing mechanical parts of a handset as soon as the earpieces have to be changed frequently because either:
not only one manufacturer provides different type of earpieces;
type of earpieces is no more manufactured and another supplier provides another earpiece instead;
depending of batch delivery, acoustic characteristics deviation can occur even from the same earpiece manufacturer.

The problem is to adapt together the handset with any other similar earpieces but having different acoustic parameters, by keeping the same acoustic wideband capability.

Most of the solutions existing today are based on a special design of the earpiece or by adding front and rear Helmholtz type resonators made by cavity between several caps and by creating front and rear leakage, or by inserting a special diaphragm to be compliant with the wideband frequency response.

### SUMMARY OF THE INVENTION

The present invention has been made to overcome or alleviate the above mentioned drawbacks or disadvantages in the art. Accordingly, it is an object of the present invention to a manufacturing and testing method to adapt a phone handset to several wideband earpieces.

A further object of the present invention is to provide a manufacturing and testing method to adapt a phone handset to several wideband earpieces which has lower cost.

According to an aspect of the present invention, there is provided a manufacturing and testing method to adapt a phone handset to several types of wideband earpieces, the method at least comprises the steps of:
designing a plurality of toolings for the manufactures of several types of phone handsets according to the acoustic characteristics of several types of wideband earpieces;
testing the plurality of toolings respectively;
determining the plurality of toolings which correspond to said several types of wideband earpieces one by one;
giving one wideband earpiece and confirming the type of the wideband earpiece;
selecting a certain tooling from the plurality of toolings according to the certain type of the wideband earpiece;
manufacturing a phone handset by using the selected tooling; and
mounting the current wideband earpiece onto the phone handset.

Preferably, the step of designing a plurality of toolings further comprises the steps of:
designing a first tooling according to the acoustic characteristics of a first type of wideband earpiece;
testing the first tooling and finally determining the first tooling;
introducing a second type of wideband earpiece which has the acoustic characteristics different from that of the first type of wideband earpiece;
adjusting the first tooling into a second tooling according to the acoustic characteristics of a second type of wideband earpiece; and
testing the second tooling and finally determining the second tooling.

Preferably, the step of adjusting the tooling may further comprises the step of removing some parts in the first tooling to form the second tooling. Alternatively, the step of adjusting the tooling may further comprises the step of adding some parts onto the first tooling to form the second tooling.

Preferably, the first tooling is a standard tooling.

In one embodiment, the removed parts from the first tooling are integrally with other parts of the first tooling. In an alternative embodiment, the added parts from the first tooling are integrally with other parts of the first tooling.

In another embodiment, the removed parts from the first tooling are detachably with other parts of the first tooling. In an alternative embodiment, the added parts onto the first tooling are detachably with other parts of the first tooling.

Specifically, the method further comprises the steps of:
introducing the plurality of toolings into a tooling store; and
choosing a certain tooling from the tooling store according to the certain type of the certain wideband earpiece.

Also, the method may further comprise the step of testing the handset assembled with the certain wideband earpiece.

As apparent from the above, the present invention has at least the following advantages.

The basic idea of the invention is to create a plastic arrangement belonging to the front shell of the handset which can be easily removed partially or totally, by using a tool during the manufacturing process, without creating another mould, to adapt the handset cavity to the acoustic characteristics of an earpiece.

This operation is also included in a manufacturing process in order to compensate deviations of acoustic characteristics of loudspeakers.

The advantages of the invention over any existing solutions are:
to avoid complex mounting of earpiece and additional pieces inside the handset;
to reduce the cost unit of wideband handset;
to keep the capability of changing the loudspeaker without modifying the shape of the handset;
to avoid defining of a new mould which is a costly operation;
to compensate technical dispersion of characteristics of the loudspeakers from one batch to another.

### BRIEF DESCRIPTIONOF THE DRAWINGS

These and/or other aspects and advantages of the invention will become apparent and more readily appreciated from the following description of the embodiments, taken in conjunction with the accompanying drawings of which:
Fig. 1 shows frequency response of an earpiece introduced in a conventional handset;
Fig. 2 shows Frequency response after modification of the calibrated leakage;
Figs. 3a, 3b and 3c show some parts of a leakage array removed from the tooling to adapt a new loudspeaker to the acoustic shape of the handset;
Fig. 4 shows handset manufacturing and testing process.

### DETAILED DESCRIPTION OF PREFERRED EMBODIMENTS OF THE INVENTION

Exemplary embodiments of the present disclosure will be described hereinafter in detail with reference to the attached drawings. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

The scope of the present invention will in no way be limited to the simply schematic views, the number of constituting components, the materials thereof, the shapes thereof, the relative arrangement thereof, etc., and are disclosed simply as an example of an embodiment.

One embodiment concerns the front resonator leak used for modifying the high frequency response characteristics.

In acoustic theory when applying low impedance earpiece or loudspeaker directly to the human ear, with small compliance as it is the case in handset use, the high frequency band can be raised by creating calibrated leakages between the front and the rear volume of the loudspeaker.

The solution consists in integrating a number of leaks into the handset in the plastic or any other material of the handset.

The calibrating leaks can be removed or enlarged one by one in order to fit perfectly with the characteristics of the loudspeaker used in the handset.

A kind of stamping design has been created in order to modify easily with a tool the shape of the leakage without building a new mould.

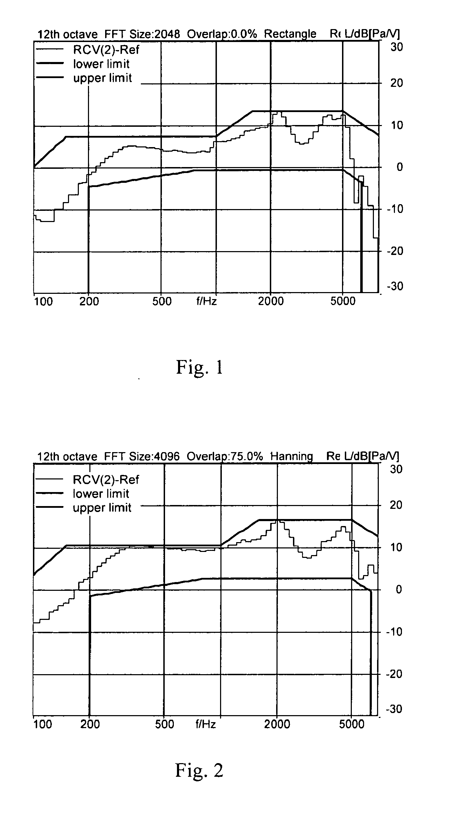

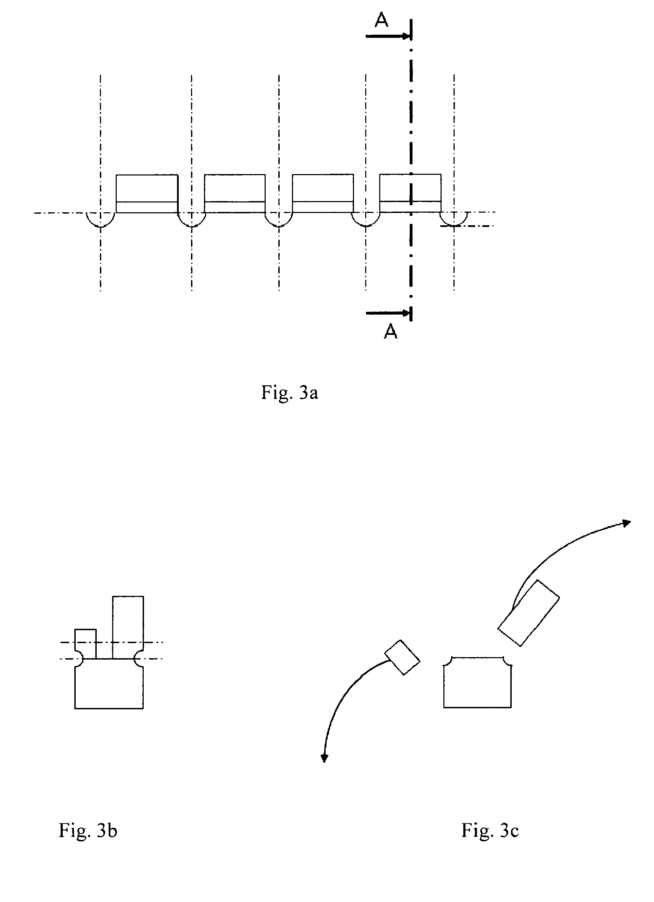

Please see Figs. 1-4, the present invention provides a manufacturing and testing method to adapt a phone handset to several types of wideband earpieces, the method at least comprises the following steps. Firstly, to design a plurality of toolings for the manufactures of several types of phone handsets according to the acoustic characteristics of several types of wideband earpieces. To test the plurality of toolings respectively. Secondly, to determine the plurality of toolings which correspond to said several types of wideband earpieces one by one. Then, to give one wideband earpiece and confirming the type of the wideband earpiece. Next, to select a certain tooling from the plurality of toolings according to the certain type of the wideband earpiece. Then, to manufacture a phone handset by using the selected tooling; and finally, to mount the current wideband earpiece onto the phone handset.

Preferably, the step of designing a plurality of toolings may further comprises the steps of:
designing a first tooling according to the acoustic characteristics of a first type of wideband earpiece;
testing the first tooling and finally determining the first tooling;
introducing a second type of wideband earpiece which has the acoustic characteristics different from that of the first type of wideband earpiece;
adjusting the first tooling into a second tooling according to the acoustic characteristics of a second type of wideband earpiece; and
testing the second tooling and finally determining the second tooling.

Also, the step of adjusting the tooling may further comprises the step of removing some parts in the first tooling to form the second tooling.

In one embodiment, the removed parts from the first tooling are integrally with other parts of the first tooling. In another embodiment, the removed parts from the first tooling are detachable from other parts of the first tooling.

Further, the method further comprises the steps of:
introducing the plurality of toolings into a tooling store; and
choosing a certain tooling from the tooling store according to the certain type of the certain wideband earpiece.

Also, the method may further comprise the step of testing the handset assembled with the certain wideband earpiece.

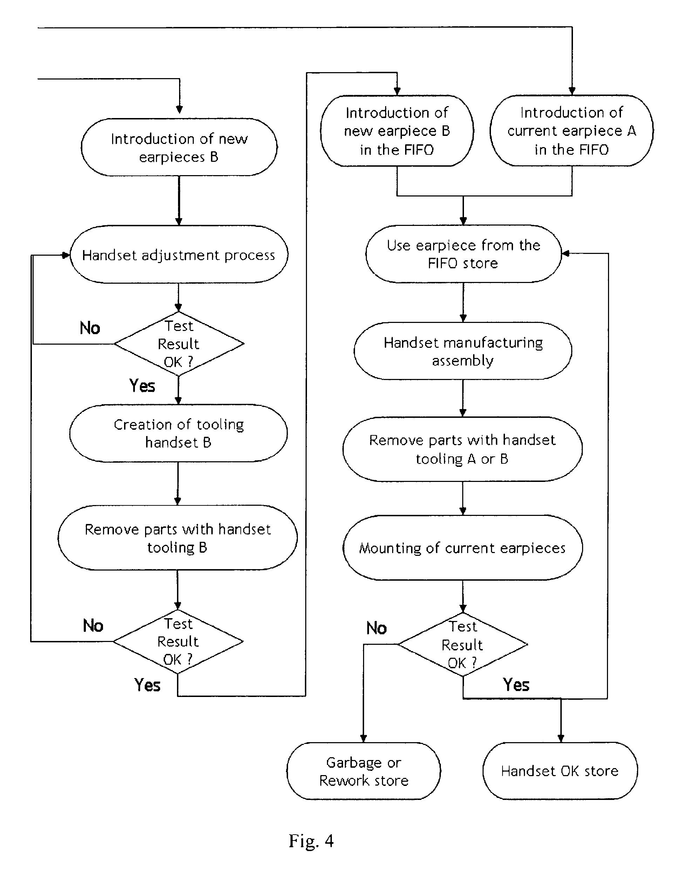

Fig. 4 shows handset manufacturing and testing process.

Concerning the above, the basic idea of the invention is to create a plastic arrangement belonging to the front shell of the handset which can be easily removed partially or totally, by using a tool during the manufacturing process, without creating another mould, to adapt the handset cavity to the acoustic characteristics of an earpiece. This operation is also included in a manufacturing process in order to compensate deviations of acoustic characteristics of loudspeakers.

The advantages of the invention over any existing solutions are:
to avoid complex mounting of earpiece and additional pieces inside the handset,
to reduce the cost unit of wideband handset,
to keep the capability of changing the loudspeaker without modifying the shape of the handset,
to avoid defining of a new mould which is a costly operation, and
to compensate technical dispersion of characteristics of the loudspeakers from one batch to another.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

## Claims

1. A method to adapt a phone handset to several types of wideband earpieces, the method at least comprises the steps of:
designing a plurality of toolings for the manufactures of several types of phone handsets according to the acoustic characteristics of several types of wideband earpieces;
testing the plurality of toolings respectively;
determining the toolings which correspond to said several types of wideband earpieces one by one;
giving one wideband earpiece and confirming the type of the wideband earpiece;
selecting a certain tooling from the plurality of toolings according to said type of the wideband earpiece;
manufacturing a phone handset by using the selected tooling; and
mounting said wideband earpiece onto the phone handset.

2. The method as claimed in claim 1, wherein the step of designing a plurality of toolings further comprises the steps of:
designing a first tooling according to the acoustic characteristics of a first type of wideband earpiece;
testing the first tooling and finally determining the first tooling;
introducing a second type of wideband earpiece which has the acoustic characteristics different from that of the first type of wideband earpiece;
adjusting the first tooling into a second tooling according to the acoustic characteristics of a second type of wideband earpiece; and
testing the second tooling and finally determining the second tooling.

3. The method as claimed in claim 1 or 2, wherein the step of adjusting the tooling further comprises the step of:
removing some parts from the first tooling to form the second tooling.

4. The method as claimed in claims 1 to 3, wherein the step of adjusting the tooling further comprises the step of:
adding some parts onto the first tooling to form the second tooling.

5. The method as claimed in claims 1 to 4, wherein the first tooling is a standard tooling.

6. The method as claimed in claims 1 to 5, wherein the removed parts from the first tooling are integrally with other parts of the first tooling.

7. The method as claimed in claims 1 to 6, wherein the added parts from the first tooling are integrally with other parts of the first tooling.

8. The method as claimed in claims 1 to 7, wherein the removed parts from the first tooling are detachable from other parts of the first tooling.

9. The method as claimed in claims 1 to 8, wherein the added parts onto the first tooling are detachable from other parts of the first tooling.

10. The method as claimed in claims 1 to 9, further comprising the steps of:
introducing the plurality of toolings into a tooling store; and
choosing a certain tooling from the tooling store according to said type of wideband earpiece.

11. The method as claimed in claims 1 to 10, further comprising the step of:
testing the handset assembled with said wideband earpiece.
